# FASCICULE DE BREVET EUROPEEN

(11) **EP 3 295 380 B1**
(45) Date de publication et mention de la délivrance du brevet: **14.10.2020**
(21) Numéro de dépôt: 16703502.1
(22) Date de dépôt: 03.02.2016
(51) Int. Cl.: G06K 19/077, G06K 19/073

(54) **DISPOSITIF D'IDENTIFICATION SOUS FORME D'ANNEAU MUNI D'UN TRANSPONDEUR RADIOFREQUENTIEL**
IDENTIFIZIERUNGSVORRICHTUNG IN FORM EINES RINGES MIT EINEM HOCHFREQUENZ-TRANSPONDER
IDENTIFICATION DEVICE IN THE FORM OF A RING PROVIDED WITH A RADIOFREQUENCY TRANSPONDER

(30) Priorité: 13.05.2015 FR 1554360
(43) Date de publication de la demande: 21.03.2018
(73) Titulaire: Icare Technologies, 20000 Ajaccio (FR)
(72) Inventeur: Neyrou, Jérémy, 20167 Peri (FR); Raiola, Fabien, 20137 Porto-Vecchio (FR)
(74) Mandataire: Marconnet, Sébastien
(86) Numéro de dépôt international: PCT/EP2016/052298
(87) Numéro de publication internationale: WO 2016/180544

(56) Documents cités:
- DE-A1- 10 317 682
- DE-U1-202007 011 421
- DE-U1-202007 011 422
- US-A1- 2011 271 053
- US-A1- 2012 320 715

## Description

L'invention porte sur un dispositif d'identification muni d'un transpondeur radiofréquentiel par exemple de type RFID (ou "Radio-identification" ou "Radio Frequency identification" en anglais) et/ou NFC (ou "Communication en champ proche" ou "Near Field Communication" en anglais) se présentant sous la forme d'un anneau.

L'invention peut être mise en œuvre dans tous les domaines nécessitant une identification, ou un mot de passe pour déverrouiller le fonctionnement d'un système, sécuriser les contrôles d'accès, tels que de manière non limitative, l'automobile, la domotique, par exemple pour l'ouverture de portes, l'informatique, et le domaine des transactions bancaires.

Dans le domaine de l'automobile, les développements de l'automatisation ont permis d'équiper les véhicules d'un dispositif de démarrage par radio-identification. Un tel dispositif comporte un transpondeur actif émettant périodiquement un champ électromagnétique pour communiquer à distance avec un lecteur radio correspondant situé dans le véhicule. Pour des raisons de facilité et d'encombrement, le dispositif de démarrage comporte un boîtier contenant le transpondeur, tel qu'une puce RFID HF, une micro-antenne, et une source d'énergie. La présence de cette source d'énergie, prenant en général la forme d'une pile, présente plusieurs inconvénients, notamment liés à la décharge et à un phénomène d'oxydation de la pile dans le cas où le boîtier n'est pas configuré de manière étanche.

Par ailleurs, le document KR101255928 propose un dispositif radio sans pile sous forme d'anneau permettant de s'affranchir d'un dispositif de type clé ou boîtier. Toutefois, ce dispositif a tendance à déclencher ou déverrouiller de manière intempestive le système associé sans contrôle du porteur.

Le document DE202007011422 décrit un bijou comportant un circuit électronique intégré possédant un dispositif de stockage de données électroniques.

Le document DE202007011421 décrit un bijou avec un interrupteur et un circuit électronique intégré, doté d'un système intégré de stockage de données électroniques.

Le document DE10317682 décrit un transpondeur placé dans un appareil doté d'un écran recouvrant au moins une antenne du transpondeur afin d'atténuer les champs électrostatiques, magnétostatiques ou électromagnétiques.

Le document US2011/271053 décrit une mémoire de données mobile comprenant un module de mémoire de données et un dispositif de maintien et/ou de support, le module de mémoire de données comportant une mémoire à semi-conducteur réinscriptible et non volatile.

Le document US2012/320715 décrit un dispositif de réglage de la sensibilité des ondes radioélectriques d'une antenne qui transmet/reçoit sans fil un signal vers/depuis un dispositif externe. Le dispositif de réglage de la sensibilité comprend un boîtier et un élément rotatif en forme d'anneau.

L'invention vise à remédier efficacement à cet inconvénient en proposant un dispositif d'identification selon la revendication 1.

L'invention permet ainsi d'activer ou désactiver le dispositif d'identification selon la volonté du porteur. On s'affranchit ainsi des risques de déclenchement intempestif de l'élément à commander.

Selon une réalisation, ledit dispositif de masquage comprend au moins un anneau coulissant en rotation par rapport audit corps annulaire, ledit anneau coulissant comportant une zone de passage du champ est apte à être déplacé entre une première position angulaire dans laquelle la zone de passage du champ est située au moins en partie en regard dudit transpondeur radiofréquentiel de manière à autoriser la propagation dudit champ électromagnétique et une deuxième position angulaire dans laquelle ladite zone de passage est décalée angulairement par rapport audit transpondeur radiofréquentiel de manière à bloquer la propagation dudit champ électromagnétique.

Selon une réalisation, ladite zone de passage de champ est réalisée dans un matériau amagnétique.

Selon une réalisation, ladite zone de passage de champ est constituée par une fenêtre ouverte réalisée dans ledit anneau coulissant.

Selon une réalisation, ledit dispositif d'identification comporte des crans apte à fournir une information au porteur relative à son état d'activation.

Selon une réalisation, ledit dispositif d'identification intègre un capteur à lecture biométrique.

Selon une réalisation, ledit dispositif de masquage est de type électronique et est apte à commander une mise sous tension dudit transpondeur.

L'invention a également pour objet un ensemble selon la revendication 7.

Selon une réalisation, ledit lecteur radiofréquentiel est une antenne résonnante ayant une fréquence de résonnance supérieure de 5 à 20% par rapport à une fréquence dudit champ électromagnétique.

Selon une réalisation, ledit lecteur radiofréquentiel est intégré dans une poignée de porte.

Selon une réalisation, ledit lecteur radiofréquentiel est placé à l'intérieur ou à l'extérieur d'un véhicule.

Selon une réalisation, ledit dispositif d'identification est apte à agir sur une configuration d'un véhicule tels qu'un verrouillage, un déverrouillage, une mise sous tension, un préchauffage, un démarrage, et/ou un réglage d'un poste de conduite

L'invention sera mieux comprise à la lecture de la description qui suit et à l'examen des figures qui l'accompagnent. Ces figures ne sont données qu'à titre illustratif mais nullement limitatif de l'invention.
La figure 1 est une vue en perspective éclatée du dispositif d'identification selon la présente invention;
la figure 2 est une vue de face d'un transpondeur utilisé avec le dispositif d'identification selon la présente invention;
Les figures 3a et 3b sont des vues en perspective du dispositif d'identification de la figure 1 respectivement dans une première position correspondant à un état activé et dans une deuxième position correspondant à un état désactivé;
La figure 4 est une vue de côté illustrant un deuxième mode de réalisation du dispositif d'identification selon la présente invention;
La figure 5 est un schéma fonctionnel des différentes interactions du dispositif d'identification selon la présente invention avec des éléments de son environnement;
La figure 6 est une vue en coupe du corps annulaire intégrant le transpondeur selon la présente invention;
Les figures 7a à 7d, sont respectivement des vues de côté, de dessus, de derrière et de devant d'un véhicule équipé d'un lecteur radio pour interagir avec le dispositif d'identification selon la présente invention.

Les éléments identiques, similaires ou analogues conservent la même référence d'une figure à l'autre.

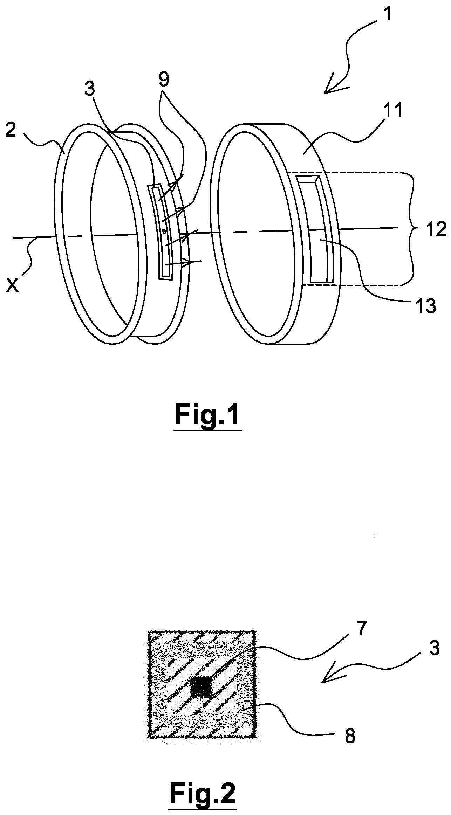

La figure 1 montre un dispositif d'identification 1 comportant un corps annulaire 2 intégrant un transpondeur 3 apte à émettre un champ électromagnétique 9 transportant des informations d'identification pour la communication avec un lecteur radio 15 correspondant. Alternativement, plusieurs transpondeurs 3 peuvent être intégrés au corps annulaire 2 pour permettre une identification par différents types de lecteurs radio 15.

En outre, un anneau coulissant 11 est mobile en rotation par rapport au corps annulaire 2 autour d'un axe X. Cet axe X est commun au corps 2 et à l'anneau coulissant 11. L'anneau coulissant 11, qui comporte une zone de passage de champ 12, est apte à être déplacé angulairement entre une première position, dite position d'activation, dans laquelle la zone de passage du champ 12 est située au moins en partie en regard dudit transpondeur 3 de manière à autoriser la propagation du champ électromagnétique 9 et une deuxième position, dite position de désactivation, dans laquelle la zone de passage de champ 12 est décalée angulairement par rapport au transpondeur 3 de manière à bloquer la propagation du champ électromagnétique 9.

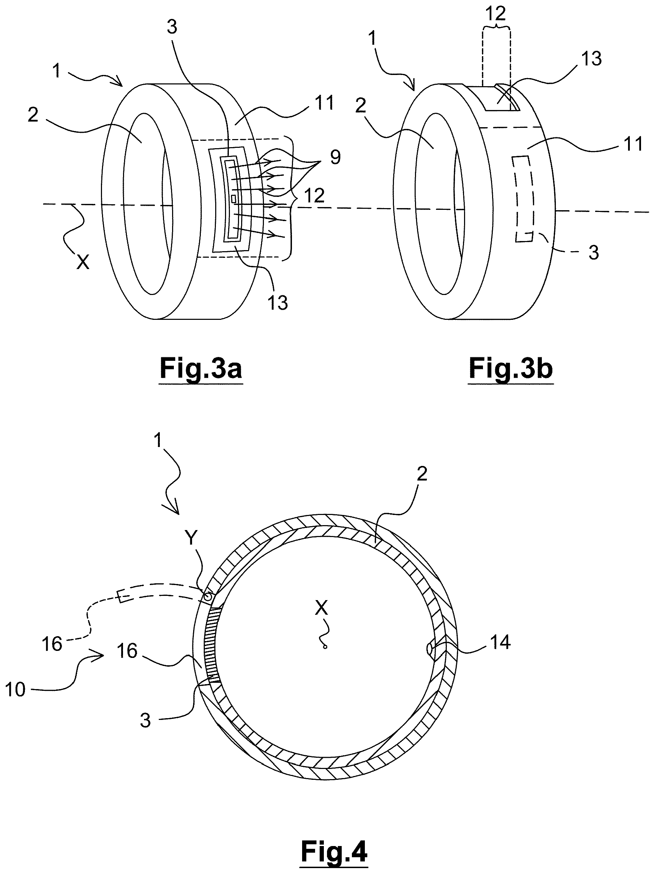

Autrement dit, dans la position d'activation montrée en figure 3a, la zone de passage de champ 12 vient chevaucher au moins en partie le transpondeur 3 intégré au corps 2. Le champ électromagnétique 9 émis par le transpondeur 3 est alors dégagé de tout obstacle, en sorte que le dispositif d'identification 1 peut communiquer avec un lecteur radio correspondant 15.

Dans la position de désactivation montrée en figure 3b, le transpondeur 3 est masqué par l'anneau coulissant 11 réalisé dans un matériau magnétique. De cette manière, le champ électromagnétique 9 émis par le transpondeur 3 est bloqué, ce qui permet d'interrompre toute communication avec le lecteur radio 15.

La zone 12 autorisant le passage du champ électromagnétique 9 vers l'extérieur de la bague peut être constituée par une fenêtre ouverte 13 ayant des dimensions correspondant à celles du transpondeur 3. La fenêtre 13 traverse de part en part la paroi de l'anneau coulissant 11 et pourra présenter par exemple une forme rectangulaire, carrée, ovale, ou toute autre forme adaptée à la configuration du dispositif d'identification 1. Alternativement, la zone de passage de champ 12 correspond à une portion de l'anneau 11 réalisée dans un matériau autorisant le passage du champ magnétique, tel que des matériaux amagnétiques comme le plastique, une résine polymère ou encore le verre.

Des crans entre le corps 2 et l'anneau coulissant 11 pourront être prévus afin d'indiquer au porteur la position angulaire d'activation ou de désactivation de l'anneau coulissant 11.

Dans un autre mode de réalisation, le dispositif de masquage est de type électronique. A titre non restrictif, le dispositif de masquage pourra alors se présenter sous la forme d'un interrupteur commandant la mise sous tension du transpondeur 3 selon la volonté du porteur du dispositif d'identification 1. L'interrupteur pourra passer d'une position d'activation dans laquelle l'alimentation électrique du transpondeur 3 par le lecteur radio 15 est autorisée, à une position de désactivation dans laquelle l'alimentation électrique du transpondeur 3 par le lecteur radio 15 n'est pas autorisée. Le passage d'une position à l'autre de l'interrupteur pourra par exemple être commandé par le déplacement de l'anneau coulissant 11 par rapport au corps annulaire 2. Bien entendu, tout autre moyen équivalent pourra être mis en œuvre pour activer et désactiver l'alimentation du transpondeur 3.

Dans un autre mode de réalisation illustré sur la figure 4, le dispositif de masquage se présente sous la forme d'un volet 16 mobile en rotation autour d'un axe Y sensiblement parallèle à l'axe X. Le volet 16 est mobile entre une position d'activation dans laquelle le volet 16 est écarté par rapport au corps 2 (cf. position représentée en traits discontinus) et une position de désactivation dans laquelle le volet 16 recouvre le transpondeur 3. Ainsi, dans la position d'activation, le volet 16 autorise la propagation du champ électromagnétique 9 émis par le transpondeur 3, en sorte que ce dernier peut communiquer avec le lecteur radio 15. Dans la position de désactivation le volet 16 bloque le champ électromagnétique 9 et toute communication avec le lecteur radio 15.

Le transpondeur 3 par exemple de type RFID et/ou NFC peut être moulé de manière étanche dans tout objet plastique ou métallique laissant passer le champ électromagnétique 9. Le transpondeur 3 se présente avantageusement sous la forme d'une étiquette passive montrée en figure 2 comprenant une puce 7 de type RFID ou NFC associée à une antenne 8 qui capte l'énergie d'un champ magnétique émis par un lecteur radio 15. Le transpondeur 3 ne nécessite donc pas de pile pour fonctionner.

Le transpondeur 3 émet un champ électromagnétique 9 sur des fréquences prédéterminées. Le choix de la fréquence de communication dépend de la profondeur de pénétration d'un rayonnement magnétique dans les matériaux susceptibles de maintenir ou couvrir le transpondeur 3. La distance de détection du transpondeur 3 par le lecteur radio 15 est de l'ordre de quelques centimètres, par exemple entre 2 et 15cm et de préférence de l'ordre de 4cm.

Dans un exemple de réalisation, la fréquence du champ électromagnétique 9 est avantageusement sélectionnée dans une gamme basse fréquence comprise entre 125 à 135kHz, permettant ainsi une distance de détection adaptée aux applications dans les domaines de l'automobile ou de la domotique notamment. Dans un autre exemple de réalisation, la fréquence du champ électromagnétique 9 est de l'ordre de 13,56 MHz. Cette haute fréquence permet une distance de détection plus courte garantissant une sécurisation des communications, telles que les communications dans le domaine des transactions bancaires. Bien entendu, la gamme de fréquence pourra être adaptée en fonction de l'application et de la distance de détection souhaitée.

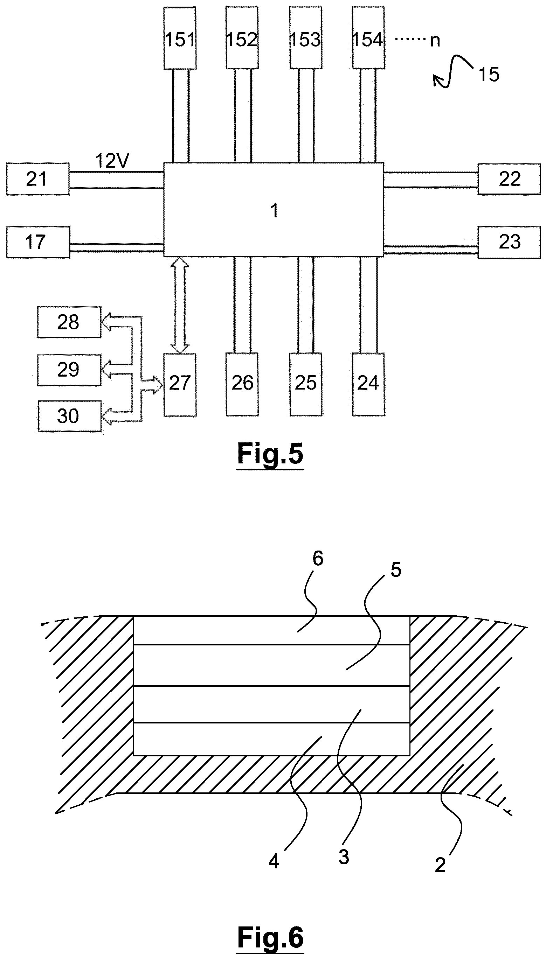

Dans un exemple de réalisation illustré par la figure 6, le corps 2 est une structure annulaire en alliage d'acier et de titane. Le transpondeur 3 est placé sur une couche de matériau réflectif 4 dont les caractéristiques permettront de moduler la distance de détection. Ce matériau réflectif 4 pourra par exemple être un matériau dérivé de l'aluminium. En outre, une couche de protection 5 est surmoulée sur le transpondeur 3. Pour la finition, une couche de vernis 6 vient recouvrir la couche de protection 5. Les couches de protection 5 et de vernis 6 sont transparentes au champ d'émission 9 émis par le transpondeur 3. En variante, les couches de protection 5 et de vernis 6 sont confondues. Bien entendu, l'épaisseur, et le choix du matériau pourront être adaptés en fonction de l'application.

En outre, comme montré en figure 4, un capteur à lecture biométrique 14 permet une lecture d'une empreinte digitale d'un porteur du dispositif 1. Le capteur à lecture biométrique 14 est positionné de préférence sur la surface interne du corps 2. Ainsi, la lecture de l'empreinte digitale est réalisée lorsque le porteur fait passer le dispositif d'identification 1 le long de son doigt. La lecture est alors réalisée une seule fois lors du passage du dispositif d'identification 1 au niveau de l'empreinte digitale du porteur. Dès que le dispositif d'identification 1 est retiré, l'identification biométrique est réclamée. Cette identification biométrique agit comme un interrupteur permettant d'activer ou désactiver directement le transpondeur 3 et donc la propagation du champ électromagnétique 9. Le capteur à lecture biométrique 14 est alimenté par induction électromagnétique, ou par tout autre moyen approprié telle qu'une source d'énergie intégrée dans le dispositif d'identification 1.

Dans le cas d'une application automobile, le transpondeur 3 pourra communiquer par exemple avec N lecteurs radio 15 directionnels (N étant un entier supérieur ou égal à 1) situés dans un véhicule 20. Cette communication vise à permettre une ouverture de droits et/ou services pour un porteur du dispositif d'identification 1.

A cet effet, chaque lecteur radiofréquentiel 15 comporte une antenne de réception pour transpondeur 3. Cette antenne se présente de préférence sous la forme d'une bobine de section rectangulaire associée à un condensateur afin de constituer une antenne résonnante. Une telle antenne concentre son énergie dans certaines directions et, est prévue pour fonctionner de façon optimale à une certaine fréquence de résonnance et pour une résistance d'adaptation précise. Pour rendre cette antenne moins sensible aux éléments métalliques environnants sa fréquence de résonnance et sa résistance d'adaptation ont été adaptées.

Dans un exemple de réalisation, une bobine d'environ 3mH avec une résistance d'adaptation de l'ordre de 250 à 500 ohms offre au lecteur radio 15 un signal de qualité optimale. La fréquence de résonnance n'est pas nécessairement fixée à la fréquence du champ électromagnétique 9 émis par le transpondeur 3. En effet, une meilleure réception du champ électromagnétique 9 est obtenue lorsque la fréquence de résonnance de l'antenne du lecteur radio 15 est supérieure de 5 à 20% par rapport à la fréquence du champ électromagnétique 9. L'alimentation électrique du lecteur radio 15 est assurée par une batterie 21 présente au sein du véhicule 20 délivrant généralement une tension de 12 Volts.

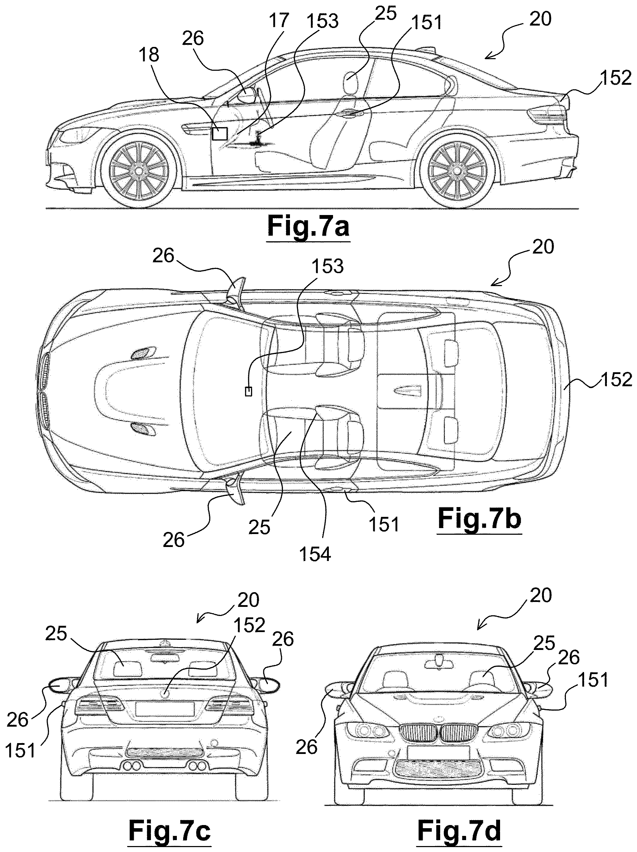

Ce type de lecteur radio 15 est placé de manière à optimiser la lecture du champ électromagnétique 9 émis par le transpondeur 3. A titre d'exemple visible sur les figures 7a à 7d, quatre lecteurs radio 15 (N = 4) contrôlant chacun une fonction différente, sont installés sur un véhicule 20. Les lecteurs radio 15 ont été en l'occurrence intégrés dans une poignée de porte 151, dans une poignée de coffre 152, dans un pommeau de vitesse 153, et à proximité d'une boucle de ceinture de sécurité 154. Pour une moto, les lecteurs radio 15 peuvent être intégrés sur le réservoir essence ou encore dans la poignée d'accélération. On notera dans ce cas que le champ électromagnétique 9 est peu atténué par un textile de type gant venant s'intercaler entre le transpondeur 3 et le lecteur radio 15. Les lecteurs radio 15 se présentent sous la forme d'un solénoïde à environ 400 spires avec une inductance de l'ordre de 3mH. La forme, leur résistance d'adaptation, leur fréquence de résonnance, et le nombre N de lecteur radio 15, ne sont pas limitatifs.

Ainsi, lorsque le porteur saisit la poignée d'une portière du véhicule 20 afin de l'ouvrir avec sa main portant le dispositif d'identification 1 dans un état activé, le dispositif 1 subit une induction électromagnétique de la part du lecteur radio 151 intégré à la poignée. Le courant induit, de l'ordre de 10µA et 5V, est suffisant pour alimenter le transpondeur 3 qui renvoie à l'antenne du lecteur radio 151 un code d'identification haute sécurité préprogrammé lors de la fabrication et non modifiable. Ce code d'identification est alors filtré, démodulé et analysé par un microcontrôleur situé dans un circuit électronique 18 situé à proximité du lecteur radio 153. Le dispositif d'identification 1 est alors reconnu, le véhicule 20 se déverrouille instantanément et une adaptation du poste de conduite s'effectue rapidement, dans un délai de l'ordre de 4 à 6 secondes.

Afin de contrôler au mieux la communication entre le dispositif d'identification 1 et les lecteurs radio 15, un interrupteur 17 commande la mise sous tension du circuit électronique 18, protégé par un boîtier, permettant à un lecteur radio 15 d'émettre un fort champ magnétique. Dans un exemple de réalisation, le boîtier protégeant le circuit électronique 18 mesure environ 11cm de long, 6cm de large et 4cm d'épaisseur et est réalisé en aluminium. Ce boîtier est fermé par quatre vis de sécurité. De cette manière, le circuit électronique 18 est protégé à la fois contre le vol et contre les ondes électromagnétiques étrangères.

De préférence, un interrupteur 17 d'allumage commandant le préchauffage, le démarrage et l'arrêt du moteur du véhicule 20, est associé à un lecteur radio de démarrage 153 situé dans le pommeau de vitesse. L'interrupteur 17 peut être placé dans l'habitacle, à portée de main du conducteur tel que sur le côté du pommeau de vitesse, près du frein à main, ou encore sur le tableau de bord. Un tel interrupteur 17 peut être mis en parallèle du système de démarrage classique en branchant des fils de commande de préchauffage et de démarrage à des actionneurs concernés du moteur ou en les branchant au niveau d'un contacteur de clé 23.

Ainsi, lorsque le conducteur installé au poste de conduite appuie sur l'interrupteur 17 contrôlant l'allumage et lorsqu'il pose sa main dotée du dispositif d'identification 1 à proximité du lecteur radio 153 de démarrage, le véhicule 20 démarre. Le véhicule 20 reste en état de fonctionnement jusqu'à un nouvel appui sur l'interrupteur 17. A cet effet, le lecteur radio 153 contrôlant le démarrage détecte le dispositif d'identification 1 et lorsque le porteur appuie sur l'interrupteur 17, le lecteur associé 153 bascule dans un état hors tension. Dans cet état, le lecteur 153 ne nécessite plus d'identification pour garder le moteur en marche. Un nouvel appui sur l'interrupteur 17 permettra de couper le moteur du véhicule 20 et de mettre simultanément le lecteur radio 153 sous tension. Le lecteur radio 153 réclamera alors le code d'identification haute sécurité du dispositif d'identification 1.

Les N lecteurs passent généralement d'un état sous tension à l'autre en fonction de l'état de verrouillage ou de déverrouillage du véhicule 20, à l'exception du lecteur radio 153 contrôlant le démarrage et du lecteur 152 placé dans la poignée de coffre. En effet, quel que soit le verrouillage ou le déverrouillage du véhicule 20, le lecteur 152 peut actionner des vérins ouvrant le coffre automatiquement. Bien entendu, chaque lecteur radio 15 peut également être associé à un interrupteur 17.

Comme montré en figure 5, le dispositif d'identification 1 peut agir sur une commande de verrouillage et de déverrouillage centralisée 22, sur un contacteur de clé 23, sur divers accessoires 24, sur un siège conducteur 25, sur des rétroviseurs 26, et sur une interface 27 contrôlant un ordinateur de bord 28, un GPS 29, et une configuration 30 véhicule. Ces différentes commandes se font par l'intermédiaire d'actionneurs commandant par exemple la position et l'orientation des rétroviseurs 26, la position, la hauteur, l'inclinaison du siège conducteur 25 et son appui tête, la position du volant. Par l'intermédiaire d'un bus connecté à une interface 27 adaptée au protocole de communication du véhicule 20, le dispositif 1 peut également agir sur le visuel d'un écran d'ordinateur de bord 28, la station radio écoutée, la voix du GPS 29, la hauteur des suspensions ainsi que leur dureté, la dureté de la direction assistée, l'électronique d'aide à la conduite, le style de conduite, la puissance du véhicule 20 et un éventuel bridage moteur destiné aux jeunes conducteurs. De préférence, le dispositif d'identification 1 est synchronisé avec l'horloge de temps absolu envoyée par le GPS.

Ainsi, lorsqu'un porteur est authentifié comme étant conducteur d'un véhicule 20, il retrouve chacun des réglages, accessoires 24, et typage de conduite, tels qu'il les avait programmés. Chaque réglage supplémentaire que le conducteur fera au cours de sa session, se trouvera enregistré. L'invention permet ainsi de retrouver le poste de conduite exactement comme laissé lors de la dernière utilisation, et de brider le moteur pour les jeunes conducteurs.

Selon le véhicule 20 et le besoin, le dispositif d'identification 1 peut également être connecté au réseau Internet par l'intermédiaire d'une connexion de donnée cellulaire, par Wifi ou Bluetooth, ceci permettant une interaction avec la base de données du véhicule 20 contenant un certain nombre de ses caractéristiques, par exemple et à titre non restrictif : les profils d'identifications, la configuration du poste de conduite, l'historique de conduite, la planification des horaires de conduite, la consommation de carburant, le kilométrage effectué ou à effectuer, l'itinéraire programmé dans le GPS 29, et l'itinéraire réellement effectué.

En outre, plusieurs dispositifs d'identification 1 peuvent être synchronisés à un même véhicule 20. L'enregistrement des dispositifs d'identification 1, du poste de conduite, et de la configuration moteur s'effectue en actionnant une commande spécifique du circuit électronique 18 en interaction avec le microcontrôleur. Ainsi, chaque porteur utilisant le véhicule 20 pourra être identifié. L'ensemble du poste de conduite, ainsi que les caractéristiques du moteur pourront être adaptés, des plages horaires d'utilisation, ainsi que des historiques pourront être enregistrés. La commande spécifique du circuit électronique 18 peut se présenter sous la forme d'un interrupteur, d'un clavier à code, ou encore d'un accès à distance de type internet.

L'utilisation d'un tel dispositif d'identification 1 permet ainsi une identification simplifiée et sécurisée. De plus, ce dispositif 1 ne nécessitant pas de pile ne risque pas de s'oxyder. Plus avantageusement, le dispositif de masquage 11, 16 permet au porteur d'actionner son dispositif d'identification 1 selon sa volonté, ce qui évite tout fonctionnement intempestif sans contrôle du porteur.

## Revendications

1. Dispositif d'identification (1) constitué par une bague apte à être disposée autour d'un doigt d'un utilisateur et comprenant un corps annulaire (2) intégrant au moins un transpondeur radiofréquentiel (3) apte à émettre un champ électromagnétique (9) transportant des informations d'identification, **caractérisé en ce que** ledit dispositif d'identification (1) comprend un dispositif de masquage (11, 16) apte à sélectivement autoriser ou bloquer une propagation dudit champ électromagnétique (9) émis par ledit transpondeur radiofréquentiel (3) et **en ce que** ledit dispositif de masquage (11, 16) comprend au moins un anneau coulissant (11) en rotation par rapport audit corps annulaire (2), ledit anneau coulissant (11) comportant une zone de passage du champ (12) est apte à être déplacé entre une première position angulaire dans laquelle la zone de passage du champ électromagnétique (12) est située au moins en partie en regard dudit transpondeur radiofréquentiel (3) de manière à autoriser la propagation dudit champ électromagnétique (9) et une deuxième position angulaire dans laquelle ladite zone de passage (12) est décalée angulairement par rapport audit transpondeur radiofréquentiel (3) de manière à bloquer la propagation dudit champ électromagnétique (9).

2. Dispositif d'identification selon la revendication 1, **caractérisé en ce que** ladite zone de passage de champ électromagnétique (12) est réalisée dans un matériau amagnétique.

3. Dispositif d'identification selon la revendication 1, **caractérisé en ce que** ladite zone de passage de champ électromagnétique (12) est constituée par une fenêtre ouverte (13) réalisée dans ledit anneau coulissant (11).

4. Dispositif d'identification selon l'une quelconque des revendications 1 à 3, **caractérisé en ce que** ledit dispositif d'identification (1) comporte des crans apte à fournir une information au porteur relative à son état d'activation.

5. Dispositif d'identification selon l'une quelconque des revendications 1 à 4, **caractérisé en ce que** ledit dispositif d'identification (1) intègre un capteur à lecture biométrique (14).

6. Dispositif d'identification selon la revendication 1, **caractérisé en ce que** ledit dispositif de masquage est de type électronique et est apte à commander une mise sous tension dudit transpondeur (3).

7. Ensemble comportant un dispositif d'identification selon l'une quelconque des revendications 1 à 6 et un lecteur radiofréquentiel (15) correspondant, **caractérisé en ce que** ledit dispositif d'identification (1) est alimenté par un champ électromagnétique émis par ledit lecteur radiofréquentiel (15).

8. Ensemble selon la revendication 7, **caractérisé en ce que** ledit lecteur radiofréquentiel (15) est une antenne résonnante ayant une fréquence de résonnance supérieure de 5 à 20% par rapport à une fréquence dudit champ électromagnétique (9).

9. Ensemble selon la revendication 7 ou 8, **caractérisé en ce que** ledit lecteur radiofréquentiel (15) est intégré dans une poignée de porte.

10. Ensemble selon la revendication 7 ou 8, **caractérisé en ce que** ledit lecteur radiofréquentiel (15) est placé à l'intérieur ou à l'extérieur d'un véhicule (20).

11. Ensemble selon la revendication 10, **caractérisé en ce que** ledit dispositif d'identification (1) est apte à agir sur une configuration (30) d'un véhicule (20) tels qu'un verrouillage, un déverrouillage, une mise sous tension, un préchauffage, un démarrage, et/ou un réglage d'un poste de conduite.

## Patentansprüche

1. Identifikationsvorrichtung (1), die aus einem Ring besteht, welcher um einen Finger eines Benutzers angeordnet werden kann und einen ringförmigen Körper (2) mit mindestens einem darin angeordneten Hochfrequenztransponder (3) für die Aussendung eines elektromagnetischen, Identifikationsinformationen tragendenden Feldes (9) aufweist, **dadurch gekennzeichnet, dass** die Identifikationsvorrichtung (1) eine Maskierungsvorrichtung (11, 16) umfasst, die eine Ausbreitung des von dem Hochfrequenztransponder (3) emittierten elektromagnetischen Feldes (9) selektiv autorisieren oder blockieren kann, und dass diese Maskierungsvorrichtung (11, 16) mindestens einen Gleitring (11) in Rotation relativ zu dem Ringkörper (2) umfasst, wobei der Gleitring (11) mit einer Felddurchgangszone (12) zwischen einer ersten Winkelposition, in welcher sich die Durchgangszone für des elektromagnetischen Feldes (12) zumindest teilweise vor dem Hochfrequenztransponder (3) befindet, um die Ausbreitung des elektromagnetischen Feldes (9) zu autorisieren, und einer zweiten Winkelposition, in welcher sich die Durchgangszone (12) in Bezug auf den Hochfrequenztransponder (3) winkelversetzt ist, um die Ausbreitung des elektromagnetischen Feldes (9) zu blockieren, bewegt werden kann.

2. Identifikationsvorrichtung nach Anspruch 1, **dadurch gekennzeichnet, dass** die Durchgangszone (12) für das elektromagnetische Feld aus einem nichtmagnetischen Material hergestellt ist.

3. Identifikationsvorrichtung nach Anspruch 1, **dadurch gekennzeichnet, dass** die Durchgangszone (12) für das elektromagnetische Feld durch ein offenes Fenster (13) in dem Gleitring (11) gebildet ist.

4. Identifikationsvorrichtung nach einem der Ansprüche 1 bis 3, **gekennzeichnet dadurch, dass** die Identifikationsvorrichtung (1) Kerben umfasst, die für den Träger eine Information über ihren Aktivierungszustand bereitstellen kann.

5. Identifikationsvorrichtung nach einem der Ansprüche 1 bis 4, **gekennzeichnet dadurch, dass** die Identifikationsvorrichtung (1) einen biometrischen Lesesensor (14) umfasst.

6. Identifikationsvorrichtung nach Anspruch 1, **dadurch gekennzeichnet, dass** die Maskierungsvorrichtung vom elektronischen Typ ist und eine Stromversorgung des Transponders (3) steuern kann.

7. Anordnung mit einer Identifikationsvorrichtung nach einem der Ansprüche 1 bis 6 und einem entsprechenden Hochfrequenzleser (15), **dadurch gekennzeichnet, dass** die Identifikationsvorrichtung (1) durch ein elektromagnetisches, von dem Hochfrequenzleser (15) emittiertes Feld gespeist wird.

8. Anordnung nach Anspruch 7, **dadurch gekennzeichnet, dass** der Hochfrequenzleser (15) eine Resonanzantenne mit einer Resonanzfrequenz von mehr als 5 bis 20% im Vergleich zu einer Frequenz des elektromagnetischen Feldes (9) ist.

9. Anordnung nach Anspruch 7 oder 8, **dadurch gekennzeichnet, dass** der Hochfrequenzleser (15) in einen Türgriff integriert ist.

10. Anordnung nach Anspruch 7 oder 8, **dadurch gekennzeichnet, dass** der Hochfrequenzleser (15) innerhalb oder außerhalb eines Fahrzeugs (20) angeordnet ist.

11. Anordnung nach Anspruch 10, **dadurch gekennzeichnet, dass** die Identifikationsvorrichtung (1) auf eine Konfiguration (30) eines Fahrzeugs (20), wie beispielsweise ein Verriegel-, Entriegel-, Einschalt-, Vorheiz-, Start- und/oder Einstellvorgang für einen Fahrständer, einwirken kann.

## Claims

1. An identification device (1) consisting of a ring, which can be arranged around a finger of a user, and comprising an annular body (2) having at least one radio-frequency transponder (3) arranged therein for the transmission of an electromagnetic field (9) carrying identification information, **characterized in that** the identification device (1) comprises a masking device (11, 16) which can selectively authorize or block a propagation of the electromagnetic field (9) emitted by the radio-frequency transponder (3), and **in that** this masking device (11, 16) at least comprises a sliding ring (11) in rotation relative to the ring body (2), wherein the sliding ring (11) comprises a field passage zone (12), which can be displaced between a first angular position, in which the passage zone (12) for the electromagnetic field is located at least partially in front of the radio-frequency transponder (3) in order to authorize the propagation of the electromagnetic field (9), and a second angular position, in which the passage zone (12) is angularly offset from the radio-frequency transponder (3) in order to block the propagation of the electromagnetic field (9) .

2. The identification device according to claim 1, **characterized in that** the passage zone (12) for the electromagnetic field is made of a non-magnetic material.

3. The identification device according to claim 1, **characterized in that** the passage zone (12) for the electromagnetic field is formed by an open window (13) in the sliding ring (11).

4. The identification device according to anyone of the claims 1 to 3, **characterized in that** the identification device (1) comprises notches which can provide the carrier with information about its activation state.

5. The identification device according to anyone of the claims 1 to 4, **characterized in that** the identification device (1) comprises a biometric reading sensor (14).

6. The identification device according to claim 1, **characterized in that** the masking device is of the electronic type and can control a power supply of the transponder (3).

7. An assembly comprising an identification device according to anyone of the claims 1 to 6 and a corresponding radio-frequency reader (15), **characterized in that** the identification device (1) is supplied by an electromagnetic field emitted by the radio-frequency reader (15).

8. The assembly according to claim 7, **characterized in that** the radio-frequency reader (15) is a resonance antenna having a resonance frequency of more than 5 to 20% compared to a frequency of the electromagnetic field (9).

9. The assembly according to claim 7 or 8, **characterized in that** the radio-frequency reader (15) is integrated in a door handle.

10. The assembly according to claim 7 or 8, **characterized in that** the radio-frequency reader (15) is arranged inside or outside a vehicle (20).

11. The assembly according to claim 10, **characterized in that** the identification device (1) can act on a configuration (30) of a vehicle (20), such as a locking, unlocking, switching-on, preheating, starting and/or setting process for an operator's stand.
